# EUROPEAN PATENT APPLICATION

(11) **EP 4 790 269 A1**
(43) Date of publication of application: **12.08.2026**
(21) Application number: 23955031.2
(22) Date of filing: 08.10.2023
(51) Int. Cl.: F16C 33/78

(54) **SEALING ASSEMBLY AND BEARING ASSEMBLY**

(71) Applicant: Schaeffler Technologies AG & Co. KG, 91074 Herzogenaurach (DE)
(72) Inventor: LIU, Xin, Shanghai 201804 (CN); WU, Lijuan, Shanghai 201804 (CN); HUANG, Chunliang, Shanghai 201804 (CN); BIERLEIN, Andreas, Shanghai 201804 (CN); ZHAO, Xu, Shanghai 201804 (CN); TANG, Yu, Shanghai 201804 (CN)
(74) Representative: Schaeffler Technologies
(86) International application number: PCT/CN2023/123357
(87) International publication number: WO 2025/076641

(57) **Abstract**

Die vorliegende Anmeldung betrifft eine Dichtungsanordnung und eine Lageranordnung. Die Dichtungsanordnung dient zum Abdichten eines ringförmigen Raums zwischen einem ersten Element und einem zweiten Element. Die Dichtungsanordnung ist einstückig ringförmig und umfasst mindestens einen leitfähigen Abschnitt und mindestens einen nichtleitenden Abschnitt, die in Umfangsrichtung verteilt und miteinander verbunden sind, wobei der mindestens eine leitfähige Abschnitt dazu dient, eine leitende Verbindung zwischen dem ersten Element und dem zweiten Element herzustellen. Die Lageranordnung umfasst das erste Element, das zweite Element und die Dichtungsanordnung. Der leitfähige Abschnitt dient dazu, eine leitende Verbindung zwischen dem ersten Element und dem zweiten Element herzustellen, damit Ladungen rechtzeitig abgeführt werden können. Dadurch können Schäden durch Funkenentladungen am ersten Element und zweiten Element wirksam vermieden und somit elektrische Korrosion verhindert werden. Darüber hinaus ist ein Teil der Dichtungsanordnung als leitfähiger Abschnitt ausgeführt, anstatt die gesamte Dichtungsanordnung aus einem teuren leitfähigen Material herzustellen, wodurch die Kosten gesenkt werden. Zusammenfassend lässt sich sagen, dass die Dichtungsanordnung und die Lageranordnung der vorliegenden Anmeldung kostengünstig sind und gleichzeitig elektrische Korrosion vermeiden.

## Description

### Technisches Gebiet

Die vorliegende Anmeldung betrifft eine Dichtungsanordnung und eine Lageranordnung, die die Dichtungsanordnung umfasst.

### Hintergrund

Das Phänomen der elektrischen Korrosion ist in den Lagern von Windkraftanlagen weit verbreitet und kann die Laufringe der Lager beschädigen, wodurch die Lebensdauer der Lager verkürzt wird.

Um das Phänomen der elektrischen Korrosion zu mindern, kann eine Dichtungsanordnung zur Abdichtung des Lagers aus leitfähigen Gummimaterialien hergestellt werden, wodurch Ladungen zwischen einem Innenring und einem Außenring des Lagers übertragen und die durch Funkenentladung verursachten Schäden am Lager wirksam reduziert werden.

Aufgrund der großen Abmessungen der Lager in Windkraftanlagen und der hohen Kosten für leitfähigen Gummi sind die Kosten der Dichtungsanordnung jedoch hoch.

### Kurzdarstellung

Ziel der vorliegenden Anmeldung ist die Bereitstellung einer Dichtungsanordnung und einer Lageranordnung, die die Dichtungsanordnung umfasst, zu geringen Kosten unter Vermeidung von elektrischer Korrosion.

Ein erster Aspekt der vorliegenden Anmeldung betrifft eine Dichtungsanordnung, die zum Abdichten eines ringförmigen Raums zwischen einem ersten Element und einem zweiten Element dient, wobei die Dichtungsanordnung einstückig ringförmig ist und mindestens einen leitfähigen Abschnitt und mindestens einen nichtleitenden Abschnitt umfasst, die in Umfangsrichtung verteilt und miteinander verbunden sind, wobei der mindestens eine leitfähige Abschnitt dazu dient, eine leitende Verbindung zwischen dem ersten Element und dem zweiten Element herzustellen.

Gemäß einer Ausführungsform der vorliegenden Anmeldung umfasst der leitfähige Abschnitt eine leitfähige Dichtungskomponente, die ein Endteil in einer ersten radialen Richtung zum Anliegen an dem zweiten Element und ein Endteil in einer zweiten radialen Richtung entgegengesetzt zur ersten radialen Richtung zum Anliegen an dem ersten Element aufweist.

Gemäß einer Ausführungsform der vorliegenden Anmeldung umfasst der leitfähige Abschnitt ferner eine leitfähige Verstärkungskomponente, die mit der leitfähigen Dichtungskomponente verbunden ist, wobei eine Leitfähigkeit der leitfähigen Verstärkungskomponente höher ist als jene der leitfähigen Dichtungskomponente.

Gemäß einer Ausführungsform der vorliegenden Anmeldung umfasst die leitfähige Verstärkungskomponente:
ein Körperteil, das sich auf einer ersten axialen Seite der leitfähigen Dichtungskomponente entlang einer ersten axialen Richtung befindet;
ein erstes axiales Verlängerungsteil, das sich von einem zweiten radialen Endteil des Körperteils in der zweiten radialen Richtung entlang der ersten axialen Richtung oder einer zweiten axialen Richtung erstreckt und zum Kontakt mit dem ersten Element dient, wobei die zweite axiale Richtung der ersten axialen Richtung entgegengesetzt ist; und
ein zweites axiales Verlängerungsteil, das sich von einem ersten radialen Endteil des Körperteils in der ersten radialen Richtung entlang der ersten axialen Richtung oder der zweiten axialen Richtung erstreckt und zum Kontakt mit dem zweiten Element dient.

Gemäß einer Ausführungsform der vorliegenden Anmeldung erstreckt sich das erste axiale Verlängerungsteil entlang der zweiten axialen Richtung, und die leitfähige Verstärkungskomponente umfasst ferner ein gebogenes Teil, das sich von dem ersten axialen Verlängerungsteil entlang einer Kontur einer zweiten axialen Seite der leitfähigen Dichtungskomponente auf der zweiten axialen Seite der leitfähigen Dichtungskomponente entgegengesetzt zur ersten axialen Seite erstreckt.

Gemäß einer Ausführungsform der vorliegenden Anmeldung ist die leitfähige Verstärkungskomponente mit einer leitfähigen verschleißfesten Komponente versehen, und die verschleißfeste Komponente ist an mindestens einer Oberfläche des zweiten axialen Verlängerungsteils in der ersten radialen Richtung befestigt.

Gemäß einer Ausführungsform der vorliegenden Anmeldung überlappt der leitfähige Abschnitt mit zwei Endflächen des angrenzenden nichtleitenden Abschnitts, die in Umfangsrichtung miteinander verbunden sind, und die beiden Endflächen sind jeweils relativ zu einer radialen Ebene geneigt.

Gemäß einer Ausführungsform der vorliegenden Anmeldung ist der leitfähige Abschnitt mittels Schnappverbindung mit dem angrenzenden nichtleitenden Abschnitt verbunden.

Ein zweiter Aspekt der vorliegenden Anmeldung betrifft eine Lageranordnung, umfassend:
ein erstes Element und ein zweites Element, wobei das erste Element und das zweite Element konzentrisch angeordnet und relativ zueinander drehbar sind; und
die Dichtungsanordnung gemäß der vorstehenden Ausführungsform, die zum Abdichten eines ringförmigen Raums zwischen dem ersten Element und dem zweiten Element dient.

Gemäß einer Ausführungsform der vorliegenden Anmeldung umfasst ein leitfähiger Abschnitt der Dichtungsanordnung eine leitfähige Dichtungskomponente, die ein Endteil in einer ersten radialen Richtung zum Anliegen an dem zweiten Element und ein Endteil in einer zweiten radialen Richtung entgegengesetzt zur ersten radialen Richtung zum Anliegen an dem ersten Element aufweist.

Gemäß einer Ausführungsform der vorliegenden Anmeldung umfasst der leitfähige Abschnitt ferner eine leitfähige Verstärkungskomponente, die mit der leitfähigen Dichtungskomponente verbunden ist, wobei eine Leitfähigkeit der leitfähigen Verstärkungskomponente höher ist als jene der leitfähigen Dichtungskomponente.

Gemäß einer Ausführungsform der vorliegenden Anmeldung umfasst die leitfähige Verstärkungskomponente:
ein Körperteil, das sich auf einer ersten axialen Seite der leitfähigen Dichtungskomponente entlang einer ersten axialen Richtung von dem ringförmigen Raum entfernt befindet;
ein erstes axiales Verlängerungsteil, das sich von einem zweiten radialen Endteil des Körperteils in der zweiten radialen Richtung entlang der ersten axialen Richtung oder einer zweiten axialen Richtung erstreckt und mit dem ersten Element in Kontakt steht, wobei die zweite axiale Richtung der ersten axialen Richtung entgegengesetzt ist; und
ein zweites axiales Verlängerungsteil, das sich von einem ersten radialen Endteil des Körperteils in der ersten radialen Richtung entlang der ersten axialen Richtung oder der zweiten axialen Richtung erstreckt und mit dem zweiten Element in Kontakt steht.

Im Vergleich zum Stand der Technik umfassen die Dichtungsanordnung und die Lageranordnung der vorliegenden Anmeldung mindestens einen leitfähigen Abschnitt und mindestens einen nichtleitenden Abschnitt, die in Umfangsrichtung verteilt und miteinander verbunden sind. Der leitfähige Abschnitt dient dazu, eine leitende Verbindung zwischen dem ersten Element und dem zweiten Element herzustellen, damit Ladungen rechtzeitig abgeführt werden können. Dadurch können Schäden durch Funkenentladungen am ersten Element und zweiten Element wirksam vermieden und somit elektrische Korrosion verhindert werden. Darüber hinaus ist ein Teil der Dichtungsanordnung als leitfähiger Abschnitt ausgeführt, anstatt die gesamte Dichtungsanordnung aus einem teuren leitfähigen Material herzustellen, wodurch die Kosten gesenkt werden. Zusammenfassend lässt sich sagen, dass die Dichtungsanordnung und die Lageranordnung der vorliegenden Anmeldung kostengünstig sind und gleichzeitig elektrische Korrosion vermeiden.

### Kurzbeschreibung der Zeichnungen

Figur 1 ist eine stereoskopische Ansicht einer Lageranordnung gemäß einer Ausführungsform der vorliegenden Anmeldung.
Figur 2 ist eine Explosionszeichnung eines Abschnitts einer Dichtungsanordnung gemäß einer Ausführungsform der vorliegenden Anmeldung, betrachtet entlang einer zweiten axialen Richtung.
Figur 3 ist eine Ansicht eines Abschnitts der Dichtungsanordnung im zusammengebauten Zustand gemäß Figur 2, betrachtet entlang der zweiten axialen Richtung.
Figur 4 ist eine Explosionszeichnung eines Abschnitts einer Dichtungsanordnung gemäß einer Ausführungsform der vorliegenden Anmeldung, betrachtet entlang einer ersten axialen Richtung.
Figur 5 ist eine Ansicht eines Abschnitts der Dichtungsanordnung im zusammengebauten Zustand gemäß Figur 4, betrachtet entlang der ersten axialen Richtung.
Figur 6 ist eine Schnittansicht eines leitfähigen Abschnitts gemäß einer Ausführungsform der vorliegenden Anmeldung.
Figur 7 ist eine stereoskopische Ansicht einer leitfähigen Verstärkungskomponente gemäß einer Ausführungsform der vorliegenden Anmeldung.

### Ausführliche Beschreibung

Die technischen Lösungen in den Ausführungsformen der vorliegenden Anmeldung werden im Folgenden klar und vollständig unter Bezugnahme auf die beiliegenden Zeichnungen in den Ausführungsformen der vorliegenden Anmeldung beschrieben. Die beschriebenen Ausführungsformen stellen lediglich mögliche technische Umsetzungen der vorliegenden Anmeldung dar und nicht alle möglichen Umsetzungen. Fachleute können die Ausführungsformen der vorliegenden Anmeldung vollständig kombinieren, um andere Ausführungsformen zu erhalten, ohne dass dafür erfinderische Arbeit erforderlich ist; auch diese Ausführungsformen fallen unter den Schutzumfang der vorliegenden Anmeldung.

Hierin bezeichnet die "axiale Richtung" eine Richtung entlang der Mittelachse der Dichtungsanordnung, die "radiale Richtung" bezeichnet die Richtung senkrecht zur Mittelachse und die "Umfangsrichtung" bezeichnet die Richtung, die sich um die Mittelachse herum erstreckt. Die Begriffe "erste/r/s", "zweite/r/s" usw. dienen dazu, ähnliche Objekte zu unterscheiden und nicht dazu, eine bestimmte Reihenfolge oder Rangfolge zu beschreiben.

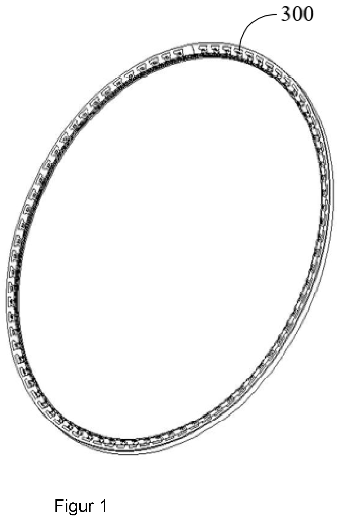

Figur 1 ist eine stereoskopische Ansicht einer Lageranordnung gemäß einer Ausführungsform der vorliegenden Anmeldung. Wie in Figur 1 gezeigt, ist eine Dichtungsanordnung 300 einstückig ringförmig. Ein erstes Element und ein zweites Element sind konzentrisch angeordnet und relativ zueinander drehbar; und die Dichtungsanordnung 300 dient zum Abdichten eines ringförmigen Raums zwischen dem ersten Element und dem zweiten Element. Die Dichtungsanordnung 300 ist drehbar, wobei das erste Element relativ zu dem zweiten Element drehbar ist.

Die Dichtungsanordnung kann an einem Lager einer Windkraftanlage angewendet werden, um das Austreten von Schmieröl im Lager zu verhindern und das Eindringen von Fremdkörpern (Staub, Schlammwasser usw.) aus der Umgebung in das Lager zu unterbinden. Das erste Element kann ein Außenring des Lagers sein und das zweite Element kann ein Innenring des Lagers sein. Alternativ kann das erste Element der Innenring des Lagers sein und das zweite Element kann der Außenring des Lagers sein. Es versteht sich, dass das erste Element und das zweite Element nicht darauf beschränkt sind und dass es sich bei dem ersten Element und dem zweiten Element auch um Halteringe zur Begrenzung des Lagers handeln kann.

Darüber hinaus versteht es sich, dass das erste Element und das zweite Element auch auf andere Gebiete als dem technischen Gebiet der Windenergieerzeugung angewendet werden können und dass sie auch auf andere Strukturen als das Lager angewendet werden können. In einer alternativen Anwendung kann beispielsweise das erste Element als Gehäuse und das zweite Element als Welle ausgeführt sein und die Dichtungsanordnung zum Abdichten eines ringförmigen Raums zwischen Welle und Gehäuse dienen.

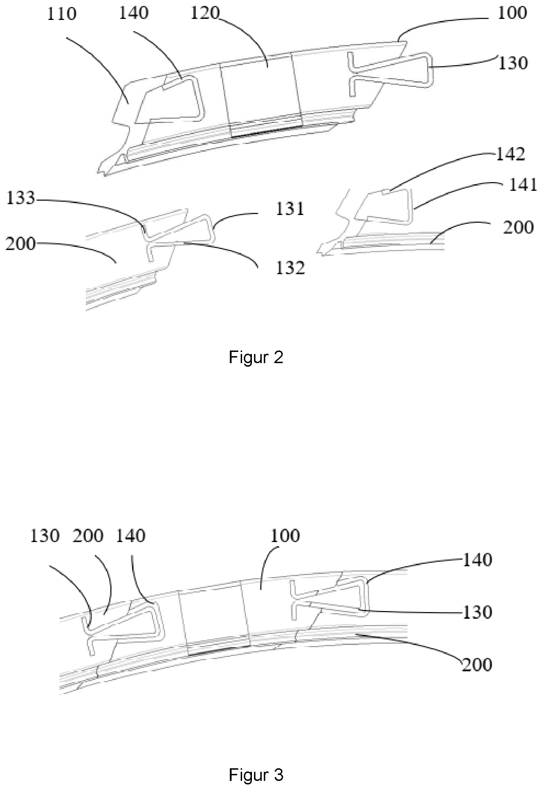

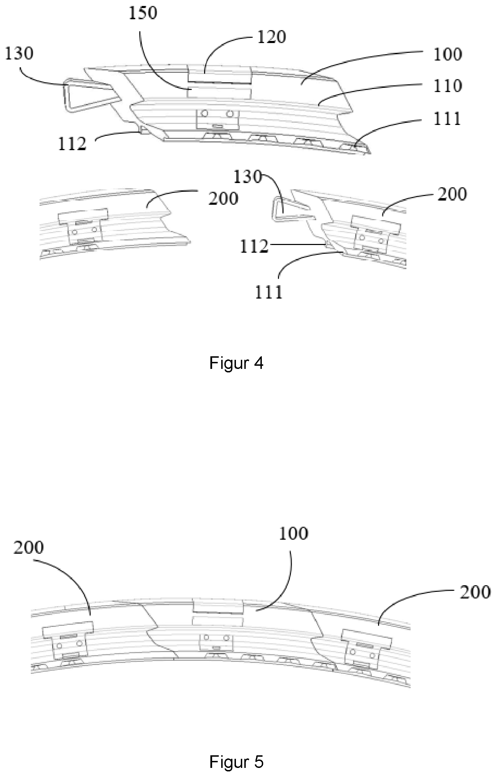

Figur 2 ist eine Explosionszeichnung eines Abschnitts einer Dichtungsanordnung gemäß einer Ausführungsform der vorliegenden Anmeldung, betrachtet entlang einer zweiten axialen Richtung; Figur 3 ist eine Ansicht eines Abschnitts der Dichtungsanordnung im zusammengebauten Zustand aus Figur 2, betrachtet entlang der zweiten axialen Richtung; Figur 4 ist eine Explosionszeichnung eines Abschnitts einer Dichtungsanordnung gemäß einer Ausführungsform der vorliegenden Anmeldung, betrachtet entlang einer ersten axialen Richtung; und Figur 5 ist eine Ansicht eines Abschnitts der Dichtungsanordnung im zusammengebauten Zustand aus Figur 4, betrachtet entlang der ersten axialen Richtung.

Wie in Figur 2 bis Figur 5 gezeigt, umfasst die Dichtungsanordnung 300 mindestens einen leitfähigen Abschnitt 100 und mindestens einen nichtleitenden Abschnitt 200, die in Umfangsrichtung verteilt und miteinander verbunden sind, und wobei der mindestens eine leitfähige Abschnitt 100 dazu dient, eine leitende Verbindung zwischen dem ersten Element und dem zweiten Element herzustellen.

Gemäß der Dichtungsanordnung der Ausführungsform der vorliegenden Anmeldung dient der mindestens eine leitfähige Abschnitt dazu, eine leitende Verbindung zwischen dem ersten Element und dem zweiten Element herzustellen, sodass Ladungen rechtzeitig abgeführt werden können. Dadurch können Schäden durch Funkenentladungen am ersten Element und zweiten Element wirksam vermieden und somit elektrische Korrosion verhindert werden. Darüber hinaus ist ein Teil der Dichtungsanordnung als leitfähiger Abschnitt ausgeführt, anstatt die gesamte Dichtungsanordnung aus einem teuren leitfähigen Material herzustellen, wodurch die Kosten gesenkt werden. Zusammenfassend lässt sich sagen, dass die Dichtungsanordnung der vorliegenden Anmeldung kostengünstig ist und gleichzeitig elektrische Korrosion vermeidet.

In einer Ausführungsform umfasst die Dichtungsanordnung 300 eine Vielzahl von leitfähigen Abschnitten 100 und eine Vielzahl von nichtleitenden Abschnitten 200, wobei jeder leitfähige Abschnitt 100 und jeder nichtleitende Abschnitt 200 jeweils die Form eines Bogens aufweist. Die Vielzahl leitfähiger Abschnitte 100 und die Vielzahl nichtleitender Abschnitte 200 sind abwechselnd in Umfangsrichtung angeordnet, so dass sich zwischen je zwei angrenzenden leitfähigen Abschnitten 100 ein nichtleitender Abschnitt 200 befindet und sich zwischen je zwei angrenzenden nichtleitenden Abschnitten 200 ein leitfähiger Abschnitt 100 befindet.

Der leitfähige Abschnitt 100 umfasst eine leitfähige Dichtungskomponente 110, die leitfähige Dichtungskomponente 110 ist mit dem nichtleitenden Abschnitt 200 verbunden, und ein Strom kann von dem ersten Element zu dem zweiten Element über die leitfähige Dichtungskomponente 110 geleitet werden. Beispielsweise ist die leitfähige Dichtungskomponente 110 aus leitfähigem Gummi gefertigt. Die leitfähige Dichtungskomponente 110 weist ein Endteil in einer ersten radialen Richtung Y1 zum Anliegen an dem zweiten Element und ein Endteil in einer zweiten radialen Richtung Y2 entgegengesetzt zur ersten radialen Richtung Y1 zum Anliegen an dem ersten Element auf.

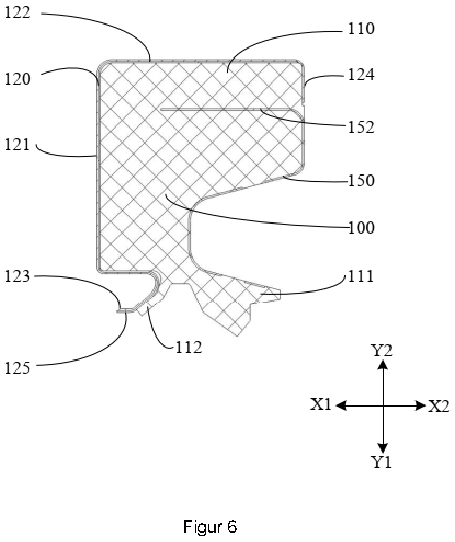

Figur 6 zeigt eine Schnittansicht eines leitfähigen Abschnitts gemäß einer Ausführungsform der vorliegenden Anmeldung. Wie in Figur 6 gezeigt, umfasst die leitfähige Dichtungskomponente 110 eine erste axiale Seite entlang einer ersten axialen Richtung X1 und eine zweite axiale Seite entlang einer zweiten axialen Richtung X2, wobei die erste axiale Richtung X1 der zweiten axialen Richtung X2 entgegengesetzt ist. Die leitfähige Dichtungskomponente 110 kann ein erstes radiales Ende entlang der ersten radialen Richtung Y1 und ein zweites radiales Ende entlang der zweiten radialen Richtung Y2 umfassen.

Wie in Figur 4 bis Figur 6 gezeigt, ist die leitfähige Dichtungskomponente 110 an dem ersten radialen Ende mit Dichtlippen versehen. In einer Ausführungsform kann das erste radiale Ende mit zwei Dichtlippen versehen sein, nämlich einer Hauptlippe 111 und einer Staubschutzlippe 112. Die Hauptlippe 111 erstreckt sich von dem ersten radialen Ende entlang der ersten radialen Richtung Y1 und der zweiten axialen Richtung X2 und dient dazu, Fluid (Schmieröl usw.) in dem ringförmigen Raum vor dem Austreten nach außen zurückzuhalten. Die Staubschutzlippe 112 ist in axialer Richtung von der Hauptlippe 111 beabstandet und befindet sich auf einer Seite der Hauptlippe 111 entlang der ersten axialen Richtung X1. Die Staubschutzlippe 112 erstreckt sich von dem ersten radialen Ende entlang der ersten radialen Richtung Y1 und der ersten axialen Richtung X1, um zu verhindern, dass Fremdkörper (Staub, Schlammwasser usw.) aus der Umgebung in den ringförmigen Raum eindringen.

Unter erneuter Bezugnahme auf Figur 2 und Figur 3 umfasst der leitfähige Abschnitt 100 ferner eine leitfähige Verstärkungskomponente 120. Die leitfähige Verstärkungskomponente 120 ist mit der leitfähigen Dichtungskomponente 110 verbunden und eine Leitfähigkeit der leitfähigen Verstärkungskomponente 120 ist höher als jene der leitfähigen Dichtungskomponente 110. Ein Strom an dem ersten Element kann über die leitfähige Dichtungskomponente 110 und die leitfähige Verstärkungskomponente 120 zu dem zweiten Element geleitet werden. Da die Leitfähigkeit der leitfähigen Verstärkungskomponente 120 höher ist als jene der leitfähigen Dichtungskomponente 110, kann die Leitfähigkeit des entsprechenden leitfähigen Abschnitts 100 verbessert und dadurch die elektrische Korrosion weiter eingeschränkt werden. Beispielsweise besteht die leitfähige Verstärkungskomponente 120 aus einem Metall mit einer wesentlich höheren Leitfähigkeit als der leitfähige Gummi.

Die leitfähige Verstärkungskomponente 120 umfasst ein Körperteil 121, ein erstes axiales Verlängerungsteil 122 und ein zweites axiales Verlängerungsteil 123. Das Körperteil 121 befindet sich auf einer ersten axialen Seite der leitfähigen Dichtungskomponente 110, das erste axiale Verlängerungsteil 122 erstreckt sich von einem zweiten radialen Endteil des Körperteils 121 in der zweiten radialen Richtung Y2 entlang der zweiten axialen Richtung X2, und das zweite axiale Verlängerungsteil 123 erstreckt sich von einem ersten radialen Endteil des Körperteils 121 in der ersten radialen Richtung Y1 entlang der ersten axialen Richtung X1.

Daher kann die leitfähige Verstärkungskomponente 120 mit dem ersten Element und dem zweiten Element in Kontakt stehen, sodass der Strom unabhängig von dem ersten Element über die leitfähige Verstärkungskomponente 120 zu dem zweiten Element geleitet werden kann. Da die leitfähige Verstärkungskomponente 120 eine hohe Leitfähigkeit aufweist, wird die elektrische Korrosion zusätzlich gehemmt.

Es versteht sich, dass die Verlängerungsrichtungen des ersten axialen Verlängerungsteils 122 und des zweiten axialen Verlängerungsteils 123 nicht darauf beschränkt sind, solange die leitfähige Verstärkungskomponente 120 mit dem ersten Element und dem zweiten Element in Kontakt stehen kann. Alternativ kann sich das erste axiale Verlängerungsteil 122 entlang der ersten axialen Richtung X1 erstrecken. Alternativ kann sich das zweite axiale Verlängerungsteil 123 entlang der zweiten axialen Richtung X2 erstrecken.

Auf der ersten axialen Seite der leitfähigen Dichtungskomponente 110 folgt das Körperteil 121 im Wesentlichen einer Kontur der leitfähigen Dichtungskomponente 110 und erstreckt sich darüber. Auf diese Weise nimmt das Körperteil 121 einen kleinen axialen Raum ein und bietet Unterstützung und/oder Begrenzung für die leitfähige Dichtungskomponente 110 auf der ersten axialen Seite der leitfähigen Dichtungskomponente 110. Wie insbesondere in Figur 6 gezeigt, umfasst die leitfähige Dichtungskomponente 110 auf der ersten axialen Seite eine zur axialen Richtung senkrechte Seitenfläche. Das Körperteil 121 kann einer Kontur der Seitenfläche folgen, um sich darüber zu erstrecken. Darüber hinaus folgt das Körperteil 121 auch einer Kontur der Staubschutzlippe 112, um sich darüber zu erstrecken, sodass die Staubschutzlippe 112 begrenzt werden kann.

In einer Ausführungsform, bei der sich das erste axiale Verlängerungsteil 122 entlang der zweiten axialen Richtung X2 erstreckt, umfasst die leitfähige Verstärkungskomponente 120 ferner ein gebogenes Teil 124, und das gebogene Teil 124 erstreckt sich von dem ersten axialen Verlängerungsteil 122 entlang einer Kontur einer zweiten axialen Seite der leitfähigen Dichtungskomponente 110 auf der zweiten axialen Seite der leitfähigen Dichtungskomponente 110. Das Körperteil 121, das erste axiale Verlängerungsteil 122 und das gebogene Teil 124 bilden eine im Wesentlichen U-förmige Struktur. In einer Ausführungsform, wie in Figur 6 gezeigt, steht die Seitenfläche der zweiten axialen Seite der leitfähigen Dichtungskomponente 110 senkrecht zur axialen Richtung. Zu diesem Zeitpunkt steht das gebogene Teil 124 senkrecht zu dem ersten axialen Verlängerungsteil 122 und erstreckt sich entlang der ersten radialen Richtung Y1.

Die leitfähige Verstärkungskomponente 120 wird durch Stanzen eines plattenförmigen Elements ausgebildet. Das plattenförmige Element ist beispielsweise rechteckig. Die leitfähige Verstärkungskomponente 120 weist eine Bogenlänge auf, die kleiner ist als jene der leitfähigen Dichtungskomponente 110, und befindet sich in Umfangsrichtung an einer mittleren Position der leitfähigen Dichtungskomponente 110.

Die leitfähige Verstärkungskomponente 120 weist einen nicht zusammengebauten Zustand und einen zusammengebauten Zustand auf. Wie in Figur 2 bis Figur 6 gezeigt, ist die leitfähige Verstärkungskomponente 120 im zusammengebauten Zustand mit der leitfähigen Dichtungskomponente 110 zusammengebaut. Im nicht zusammengebauten Zustand ist die leitfähige Verstärkungskomponente 120 nicht mit der leitfähigen Dichtungskomponente 110 zusammengebaut.

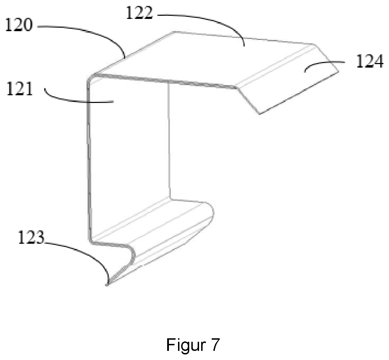

Figur 7 zeigt eine stereoskopische Ansicht der leitfähigen Verstärkungskomponente 120 gemäß einer Ausführungsform der vorliegenden Anmeldung im nicht zusammengebauten Zustand. Im nicht zusammengebauten Zustand bildet das gebogene Teil 124 einen stumpfen Winkel in Bezug auf das erste axiale Verlängerungsteil 122, und das zweite axiale Verlängerungsteil 123 erstreckt sich in eine Richtung, in der sich das Endteil des Körperteils 121 in der ersten radialen Richtung Y1 erstreckt. Während des Zusammenbaus der leitfähigen Dichtungskomponente 110 und der leitfähigen Verstärkungskomponente 120 kann zunächst das radiale Endteil der leitfähigen Dichtungskomponente 110 in der zweiten radialen Richtung Y2 manuell in die U-förmige Struktur der leitfähigen Verstärkungskomponente 120 gedrückt werden. Anschließend werden die relativen Positionen der leitfähigen Verstärkungskomponente 120 und der leitfähigen Dichtungskomponente 110 so angepasst, dass das Körperteil 121 der leitfähigen Verstärkungskomponente 120 an die erste axiale Seite der leitfähigen Dichtungskomponente 110 passt. Anschließend wird das gebogene Teil 124 so gebogen, dass es der Kontur der zweiten axialen Seite der leitfähigen Dichtungskomponente 110 entspricht, und das zweite axiale Verlängerungsteil 123 wird so gebogen, dass es sich in axialer Richtung erstreckt.

Um Verschleiß vorzubeugen, ist die leitfähige Verstärkungskomponente 120 mit einer leitfähigen verschleißfesten Komponente 125 versehen. Die verschleißfeste Komponente 125 ist in der ersten radialen Richtung Y1 an mindestens einer Oberfläche des zweiten axialen Verlängerungsteils 123 befestigt. Dadurch kann ein Verschleiß der leitfähigen Verstärkungskomponente 120 durch relative Drehung mit dem zweiten Element vermieden werden. Die verschleißfeste Komponente 125 kann aus kohlenstofffaserverstärktem Kunststoff oder Polytetrafluorethylenmaterial mit einer leitfähigen Beschichtung (z. B. einer Silberbeschichtung) bestehen.

In einer Ausführungsform ist die leitfähige Verstärkungskomponente 120 insbesondere als eine sehr dünne Metallplatte und die verschleißfeste Komponente 125 als ein verschleißfestes Blech ausgeführt. Das verschleißfeste Blech und die Metallplatte können im Wesentlichen die gleiche Größe haben, sodass das verschleißfeste Blech an der gesamten Seitenfläche der Metallplatte befestigt ist. In der Ausführungsform umfasst ein Herstellungsverfahren für die leitfähige Verstärkungskomponente 120 Folgendes: zunächst das Laminieren der Metallplatte und des verschleißfesten Blechs; und anschließend das Stanzen der laminierten Metallplatte und des verschleißfesten Blechs in die Form der leitfähigen Verstärkungskomponente 120 gemäß der vorstehenden Ausführungsform.

Der leitfähige Abschnitt 100 überlappt mit zwei Endflächen des angrenzenden nichtleitenden Abschnitts 200, die in Umfangsrichtung miteinander verbunden sind, und die beiden Endflächen sind jeweils relativ zu einer radialen Ebene geneigt. Durch Neigen der beiden Endflächen relativ zur radialen Ebene kann verhindert werden, dass Schmieröl aus dem ringförmigen Raum nach außen austritt, wodurch die Dichtungsleistung verbessert wird.

Der leitfähige Abschnitt 100 ist lösbar mit dem angrenzenden nichtleitenden Abschnitt 200 verbunden. In einer Ausführungsform ist der leitfähige Abschnitt 100 mit dem angrenzenden nichtleitenden Abschnitt 200 durch eine Schnappverbindung verbunden, sodass ein Trennen des leitfähigen Abschnitts 100 und des nichtleitenden Abschnitts 200 verhindert wird.

In einer Ausführungsform, wie in Figur 2 bis Figur 5 gezeigt, ist ein erstes Endteil des leitfähigen Abschnitts 100 in Umfangsrichtung mit einem vorstehenden Element 130 versehen, und der angrenzende nichtleitende Abschnitt 200 ist an einer dem vorstehenden Element 130 entsprechenden Position mit einem vertieften Element 140 versehen. Ein zweites Endteil des leitfähigen Abschnitts 100 in Umfangsrichtung, das dem ersten Endteil gegenüberliegt, ist mit einem vertieften Element 140 versehen, und der angrenzende nichtleitende Abschnitt 200 ist an einer Position, die dem vertieften Element 140 entspricht, mit einem vorstehenden Element 130 versehen. Das vorstehende Element 130 und das vertiefte Element 140 können an der leitfähigen Dichtungskomponente 110 des leitfähigen Abschnitts 100 angeordnet sein.

Das vertiefte Element 140 weist von einer Unterseite 141 bis zu einer Öffnung davon eine verjüngte Struktur auf, und das vorstehende Element 130 weist entlang der Verlängerungsrichtung davon eine verjüngte Struktur auf. Das vorstehende Element 130 und/oder das vertiefte Element 140 können aus einem elastischen Material bestehen. Das vorstehende Element 130 kann unter Einwirkung einer Extrusionskraft in das vertiefte Element 140 eingebettet werden.

Das vorstehende Element 130 ist als plattenförmiges Element ausgeführt und umfasst ein Verbindungsteil 131 sowie zwei Schenkelteile 132, die jeweils mit den beiden Enden des Verbindungsteils 131 verbunden sind. Das Verbindungsteil 131 und die beiden Schenkelteile 132 sind so umschlossen, dass sie einen im Wesentlichen U-förmigen Raum ausbilden. Die Öffnung des im Wesentlichen U-förmigen Raums verläuft im Wesentlichen in Umfangsrichtung, und der im Wesentlichen U-förmige Raum verjüngt sich in Richtung vom Verbindungsteil 131 zu den freien Enden der Schenkelteile 132.

Die Schenkelteile 132 des vorstehenden Elements 130 sind mit dem leitfähigen Abschnitt 100 und dem nichtleitenden Abschnitt 200, in dem sich die Schenkelteile befinden, verbunden. Das freie Ende jedes Schenkelteils 132 ist mit einem Flansch versehen und der Flansch erstreckt sich von dem freien Ende im Wesentlichen in radialer Richtung von dem im Wesentlichen U-förmigen Raum weg, um die Verbindung zwischen dem vorstehenden Element 130 und dem leitfähigen Abschnitt 100 sowie dem nichtleitenden Abschnitt 200, in dem sich der Schenkelteil befindet, weiter zu verstärken. Die leitfähige Dichtungskomponente 110 wird durch einen Vulkanisationsprozess hergestellt, sodass das vorstehende Element 130 in die leitfähige Dichtungskomponente 110 integriert werden kann. Während des Vulkanisationsprozesses kann ein halbfester Gummi den im Wesentlichen U-förmigen Raum ausfüllen. Der nichtleitende Abschnitt 200 wird durch einen Vulkanisationsprozess hergestellt, sodass das vorstehende Element 130 in den nichtleitenden Abschnitt 200 integriert werden kann.

Das vertiefte Element 140 ist als plattenförmiges Element ausgeführt und umfasst eine Unterseite 141 und zwei Seitenwandteile 142, die jeweils mit der Unterseite 141 verbunden sind. Die Unterseite 141 und die beiden Seitenwandteile 142 sind umschlossen, um einen im Wesentlichen U-förmigen Raum auszubilden. Die Öffnung des im Wesentlichen U-förmigen Raumes verläuft im Wesentlichen in Umfangsrichtung, und der im Wesentlichen U-förmige Raum verjüngt sich in Richtung von der Unterseite 141 zu der Öffnung. Der leitfähige Abschnitt 100 und der nichtleitende Abschnitt 200, in dem sich das vertiefte Element 140 befindet, sind mit einer Nut versehen, die der Form des vertieften Elements 140 entspricht, und das vertiefte Element 140 ist in der Nut aufgenommen. Die leitfähige Dichtungskomponente 110 wird durch einen Vulkanisationsprozess hergestellt, sodass das vertiefte Element 140 in die leitfähige Dichtungskomponente 110 integriert werden kann. Der nichtleitende Abschnitt 200 wird durch einen Vulkanisationsprozess hergestellt, sodass das vertiefte Element 140 in den nichtleitenden Abschnitt 200 integriert werden kann.

Es versteht sich jedoch, dass die Anordnung des vorstehenden Elements 130 und des vertieften Elements 140 nicht darauf beschränkt ist, solange der leitfähige Abschnitt 100 in Schnappverbindung mit dem nichtleitenden Abschnitt 200 steht. In einer alternativen Ausführungsform sind beide Enden des leitfähigen Abschnitts 100 in Umfangsrichtung jeweils mit vorstehenden Elementen 130 versehen und beide Enden des nichtleitenden Abschnitts 200 sind in Umfangsrichtung jeweils mit vertieften Elementen 140 versehen. Alternativ sind beide Enden des leitfähigen Abschnitts 100 in Umfangsrichtung jeweils mit vertieften Elementen 140 versehen und beide Enden des nichtleitenden Abschnitts 200 sind in Umfangsrichtung jeweils mit vorstehenden Elementen 130 versehen.

Der leitfähige Abschnitt 100 umfasst ferner ein elastisches Stützelement 150 und das elastische Stützelement 150 ist mit der leitfähigen Dichtungskomponente 110 verbunden, um eine elastische Stützkraft auf die leitfähige Dichtungskomponente 110 auszuüben. Das elastische Stützelement 150 kann durch einen Vulkanisationsprozess in die leitfähige Dichtungskomponente 110 integriert werden. In Umfangsrichtung befindet sich das elastische Stützelement 150 in einer mittleren Position der leitfähigen Dichtungskomponente 110. Das elastische Stützelement 150 befindet sich auf der zweiten axialen Seite der leitfähigen Dichtungskomponente 110 und ist entsprechend der Position der leitfähigen Verstärkungskomponente 120 auf der ersten axialen Seite angeordnet.

Unter erneuter Bezugnahme auf Figur 6 ist das elastische Stützelement 150 als plattenförmiges Element ausgebildet und umfasst einen Hauptkörperteil 151. Das Hauptkörperteil 151 erstreckt sich entlang einer Kontur der zweiten axialen Seite der leitfähigen Dichtungskomponente 110. Auf der zweiten axialen Seite der leitfähigen Dichtungskomponente 110 ist eine im Wesentlichen C-förmige Öffnung ausgebildet, und das elastische Stützelement 150 ist an einer der Öffnung entsprechenden Position in C-Form ausgebildet. Das elastische Stützelement 150 dient dazu, einen Druck auf die Hauptlippe 111 entlang der ersten radialen Richtung Y1 auszuüben.

Das elastische Stützelement 150 umfasst ferner ein gebogenes Teil 152 und das gebogene Teil 152 ist in der leitfähigen Dichtungskomponente 110 eingebettet. Das gebogene Teil 152 ist in der zweiten radialen Richtung Y2 mit dem Endteil des Körperteils 121 verbunden.

Der nichtleitende Abschnitt 200 umfasst eine nichtleitende Dichtungskomponente. Die nichtleitende Dichtungskomponente weist im Wesentlichen die gleiche Struktur wie die leitfähige Dichtungskomponente 110 auf und wird daher hier nicht beschrieben. Der nichtleitende Abschnitt 200 umfasst ferner ein elastisches Stützelement. Das elastische Stützelement des nichtleitenden Abschnitts 200 weist im Wesentlichen die gleiche Struktur wie das elastische Stützelement 150 des leitfähigen Abschnitts 100 auf und wird daher hier nicht beschrieben.

Gemäß einer Ausführungsform der vorliegenden Anmeldung wird ferner eine Lageranordnung bereitgestellt. Die Lageranordnung umfasst ein erstes Element, ein zweites Element und die Dichtungsanordnung 300. In einer Ausführungsform kann das erste Element ein Außenring des Lagers sein und das zweite Element kann ein Innenring des Lagers sein. Alternativ kann das erste Element der Innenring des Lagers sein und das zweite Element kann der Außenring des Lagers sein. Es versteht sich, dass das erste Element und das zweite Element nicht darauf beschränkt sind und dass es sich bei dem ersten Element und dem zweiten Element auch um Halteringe zur Begrenzung des Lagers handeln kann.

Das erste Element und das zweite Element sind konzentrisch angeordnet und sind relativ zueinander um eine axiale Richtung drehbar. Zwischen dem ersten Element und dem zweiten Element befindet sich ein ringförmiger Raum, und die Dichtungsanordnung dient dazu, den ringförmigen Raum abzudichten. Die Dichtungsanordnung ist relativ zu dem zweiten Element zusammen mit dem ersten Element drehbar. Es können zwei Dichtungsanordnungen vorgesehen sein, um den ringförmigen Raum auf beiden axialen Seiten des ersten Elements bzw. des zweiten Elements abzudichten.

Die Dichtungsanordnung 300 umfasst mindestens einen leitfähigen Abschnitt 100 und mindestens einen nichtleitenden Abschnitt 200, die in Umfangsrichtung verteilt und miteinander verbunden sind, und der mindestens eine leitfähige Abschnitt 100 dient dazu, eine leitende Verbindung zwischen dem ersten Element und dem zweiten Element herzustellen.

Gemäß der Lageranordnung der Ausführungsform der vorliegenden Anmeldung dient der mindestens eine leitfähige Abschnitt dazu, eine leitende Verbindung zwischen dem ersten Element und dem zweiten Element herzustellen, sodass Ladungen rechtzeitig abgeführt werden können. Dadurch können Schäden durch Funkenentladungen am ersten Element und zweiten Element wirksam vermieden und somit elektrische Korrosion verhindert werden. Darüber hinaus ist ein Teil der Dichtungsanordnung der Lageranordnung als leitfähiger Abschnitt ausgeführt, anstatt die gesamte Dichtungsanordnung aus einem teuren leitfähigen Material herzustellen, wodurch die Kosten gesenkt werden. Zusammenfassend lässt sich sagen, dass die Lageranordnung der vorliegenden Anmeldung kostengünstig ist und gleichzeitig elektrische Korrosion vermeidet.

Die detaillierte Struktur der Dichtungsanordnung 300 wurde bereits vorstehend beschrieben, und um Redundanz zu vermeiden, wird die detaillierte Beschreibung der Dichtungsanordnung 300 im Folgenden weggelassen. Die Verbindung, die Lagebeziehung usw. zwischen der Dichtungsanordnung 300 und dem ersten Element und dem zweiten Element werden hauptsächlich im Folgenden erläutert.

Der leitfähige Abschnitt 100 umfasst eine leitfähige Dichtungskomponente 110, die leitfähige Dichtungskomponente 110 ist mit dem nichtleitenden Abschnitt 200 verbunden, und ein Strom kann von dem ersten Element zu dem zweiten Element über die leitfähige Dichtungskomponente 110 geleitet werden. Die leitfähige Dichtungskomponente 110 weist ein Endteil in der ersten radialen Richtung Y1 zum Anliegen an dem zweiten Element und ein Endteil in der zweiten radialen Richtung Y2 zum Anliegen an dem ersten Element auf.

Die leitfähige Dichtungskomponente 110 ist an dem ersten radialen Ende entlang der ersten radialen Richtung Y1 in Richtung des zweiten Elements mit einer Dichtlippe versehen und die Dichtlippe liegt an dem zweiten Element an. Wenn sich das erste Element relativ zu dem zweiten Element dreht, drückt die Dichtlippe gegen eine radial äußere Fläche des zweiten Elements, um eine dynamische Abdichtung bereitzustellen.

In einer Ausführungsform kann das erste radiale Ende mit zwei Dichtlippen versehen sein, nämlich einer Hauptlippe 111 und einer Staubschutzlippe 112. Die Hauptlippe 111 erstreckt sich von dem ersten radialen Ende entlang der ersten radialen Richtung Y1 und der zweiten axialen Richtung X2 bis sie an dem zweiten Element anliegt, um Fluid (Schmieröl usw.) in dem ringförmigen Raum vor dem Austreten nach außen zurückzuhalten. Die Staubschutzlippe 112 ist in axialer Richtung von der Hauptlippe 111 beabstandet und befindet sich auf einer Seite der Hauptlippe 111 entlang der ersten axialen Richtung X1. Die Staubschutzlippe 112 erstreckt sich von dem ersten radialen Ende entlang der ersten radialen Richtung Y1 und der ersten axialen Richtung X1 bis sie an dem zweiten Element anliegt, um zu verhindern, dass Fremdkörper (Staub, Schlammwasser usw.) aus der Umgebung in den ringförmigen Raum eindringen.

Die leitfähige Dichtungskomponente 110 umfasst eine erste axiale Seite entlang der ersten axialen Richtung X1 und eine zweite axiale Seite entlang der zweiten axialen Richtung X2, wobei die erste axiale Richtung X1 der zweiten axialen Richtung X2 entgegengesetzt ist. Die erste axiale Seite ist eine von dem ringförmigen Raum abgewandte Seite, das heißt, eine Luftseite, und die zweite axiale Seite ist eine dem ringförmigen Raum zugewandte Seite, das heißt, eine Schmierseite.

Der leitfähige Abschnitt 100 umfasst ferner eine leitfähige Verstärkungskomponente 120. Die leitfähige Verstärkungskomponente 120 ist mit der leitfähigen Dichtungskomponente 110 verbunden und eine Leitfähigkeit der leitfähigen Verstärkungskomponente 120 ist höher als jene der leitfähigen Dichtungskomponente 110. Ein Strom an dem ersten Element kann über die leitfähige Dichtungskomponente 110 und die leitfähige Verstärkungskomponente 120 zu dem zweiten Element geleitet werden. Da die Leitfähigkeit der leitfähigen Verstärkungskomponente 120 höher ist als jene der leitfähigen Dichtungskomponente 110, kann die Leitfähigkeit des entsprechenden leitfähigen Abschnitts 100 verbessert und dadurch die elektrische Korrosion weiter eingeschränkt werden.

Die leitfähige Verstärkungskomponente 120 umfasst ein Körperteil 121, ein erstes axiales Verlängerungsteil 122 und ein zweites axiales Verlängerungsteil 123. Das Körperteil 121 befindet sich auf der ersten axialen Seite der leitfähigen Dichtungskomponente 110. Das erste axiale Verlängerungsteil 122 erstreckt sich von einem zweiten radialen Endteil des Körperteils 121 in der zweiten radialen Richtung Y2 entlang der zweiten axialen Richtung X2 und steht mit dem ersten Element in Kontakt. Das zweite axiale Verlängerungsteil 123 erstreckt sich von einem ersten radialen Endteil des Körperteils 121 in der ersten radialen Richtung Y1 entlang der ersten axialen Richtung X1 und steht mit dem zweiten Element in Kontakt.

Somit kann die leitfähige Verstärkungskomponente 120 mit dem ersten Element bzw. dem zweiten Element in Kontakt stehen, sodass ein Strom unabhängig von dem ersten Element über die leitfähige Verstärkungskomponente 120 zu dem zweiten Element geleitet werden kann. Da die leitfähige Verstärkungskomponente 120 eine hohe Leitfähigkeit aufweist, wird die elektrische Korrosion zusätzlich gehemmt.

Die leitfähige Verstärkungskomponente 120 steht mit dem ersten Element und dem zweiten Element in Presspassung, sodass sich die leitfähige Verstärkungskomponente 120 mit dem ersten Element relativ zu dem zweiten Element drehen kann, wenn sich das erste Element relativ zu dem zweiten Element dreht.

Auf der ersten axialen Seite der leitfähigen Dichtungskomponente 110 folgt das Körperteil 121 im Wesentlichen einer Kontur der leitfähigen Dichtungskomponente 110 und erstreckt sich darüber. Auf diese Weise nimmt das Körperteil 121 einen kleinen axialen Raum ein und bietet Unterstützung und/oder Begrenzung für die leitfähige Dichtungskomponente 110 auf der ersten axialen Seite der leitfähigen Dichtungskomponente 110. Wie insbesondere in Figur 6 gezeigt, umfasst die leitfähige Dichtungskomponente 110 auf der ersten axialen Seite eine zur axialen Richtung senkrechte Seitenfläche. Das Körperteil 121 kann einer Kontur der Seitenfläche folgen, um sich darüber zu erstrecken. Darüber hinaus folgt das Körperteil 121 auch der Kontur der Staubschutzlippe 112 und erstreckt sich darüber, wodurch die Staubschutzlippe 112 begrenzt wird, sodass die Staubschutzlippe 112 eng an dem zweiten Element anliegt.

Ein Zustand, der in Figur 6 gezeigt ist, ist ein Zustand, in dem der leitfähige Abschnitt 100 nicht auf dem ersten Element und dem zweiten Element montiert ist. Im nicht zusammengebauten Zustand erstrecken sich die Hauptlippe 111 und die Staubschutzlippe 112 frei. Während die Montage des leitfähigen Abschnitts 100 an dem ersten Element und dem zweiten Element erfolgt, wird gemäß der vorstehenden Ausführungsform ein Druck auf den zusammengebauten leitfähigen Abschnitt 100 ausgeübt, um den leitfähigen Abschnitt 100 in den ringförmigen Raum zwischen dem ersten Element und dem zweiten Element zu komprimieren. Dabei verformen sich die Hauptlippe 111 und die Staubschutzlippe 112 elastisch und liegen somit fest an der radial äußeren Fläche des zweiten Elements an, während das zweite axiale Verlängerungsteil 123 fest an einer radial inneren Fläche des ersten Elements anliegt. Somit ist der ringförmige Raum zuverlässig abgedichtet.

Die vorstehenden Ausführungen beschreiben lediglich einige Ausführungsformen der vorliegenden Anmeldung und sollen die vorliegende Anmeldung in keiner Weise einschränken. Auch einfache Änderungen, gleichwertige Modifikationen und sonstige Änderungen an den vorstehenden Ausführungsformen fallen unter den Schutzumfang der technischen Lösung der vorliegenden Anmeldung.

### Bezugszeichen:

100. Leitfähiger Abschnitt;
110. Leitfähige Dichtungskomponente; 111. Hauptlippe; 112. Staubschutzlippe;
120. Leitfähige Verstärkungskomponente; 121. Körperteil; 122. Erstes axiales Verlängerungsteil; 123. Zweites axiales Verlängerungsteil; 124. Gebogenes Teil; 125. Verschleißfeste Komponente;
130. Vorstehendes Element; 131. Verbindungsteil; 132. Stützteil; 133. Flansch;
140. Vertieftes Element; 141. Unterseite; 142. Seitenwandteil;
150. Elastisches Stützelement; 151. Hauptkörperteil; 152. Gebogenes Teil;
200. Nichtleitender Abschnitt;
300. Dichtungsanordnung;
X1. erste axiale Richtung; X2. Zweite axiale Richtung; Y1. Erste radiale Richtung; Y2. Zweite radiale Richtung.

## Patentansprüche

1. Dichtungsanordnung (300), die zum Abdichten eines ringförmigen Raums zwischen einem ersten Element und einem zweiten Element dient, wobei die Dichtungsanordnung (300) einstückig ringförmig ist und mindestens einen leitfähigen Abschnitt (100) und mindestens einen nichtleitenden Abschnitt (200) umfasst, die in Umfangsrichtung verteilt und miteinander verbunden sind, wobei der mindestens eine leitfähige Abschnitt (100) dazu dient, eine leitende Verbindung zwischen dem ersten Element und dem zweiten Element herzustellen.

2. Dichtungsanordnung (300) nach Anspruch 1, wobei der leitfähige Abschnitt (100) Folgendes umfasst:
eine leitfähige Dichtungskomponente (110), die ein Endteil in einer ersten radialen Richtung (Y1) zum Anliegen an dem zweiten Element und ein Endteil in einer zweiten radialen Richtung (Y2) entgegengesetzt zur ersten radialen Richtung (Y1) zum Anliegen an dem ersten Element aufweist.

3. Dichtungsanordnung (300) nach Anspruch 2, wobei der leitfähige Abschnitt (100) ferner Folgendes umfasst:
eine leitfähige Verstärkungskomponente (120), die mit der leitfähigen Dichtungskomponente (110) verbunden ist, wobei eine Leitfähigkeit der leitfähigen Verstärkungskomponente (120) höher ist als jene der leitfähigen Dichtungskomponente (110).

4. Dichtungsanordnung (300) nach Anspruch 3, wobei die leitfähige Verstärkungskomponente (120) Folgendes umfasst:
ein Körperteil (121), das sich auf einer ersten axialen Seite der leitfähigen Dichtungskomponente (110) entlang einer ersten axialen Richtung (X1) befindet;
ein erstes axiales Verlängerungsteil (122), das sich von einem zweiten radialen Endteil des Körperteils (121) in der zweiten radialen Richtung (Y2) entlang der ersten axialen Richtung (X1) oder einer zweiten axialen Richtung (X2) erstreckt und zum Kontakt mit dem ersten Element dient, wobei die zweite axiale Richtung (X2) der ersten axialen Richtung (X1) entgegengesetzt ist; und
ein zweites axiales Verlängerungsteil (123), das sich von einem ersten radialen Endteil des Körperteils (121) in der ersten radialen Richtung entlang der ersten axialen Richtung (X1) oder der zweiten axialen Richtung (X2) erstreckt und zum Kontakt mit dem zweiten Element dient.

5. Dichtungsanordnung (300) nach Anspruch 4, wobei sich das erste axiale Verlängerungsteil (122) entlang der zweiten axialen Richtung (X2) erstreckt und die leitfähige Verstärkungskomponente (120) ferner Folgendes umfasst:
ein gebogenes Teil (124), das sich von dem ersten axialen Verlängerungsteil (122) entlang einer Kontur einer zweiten axialen Seite der leitfähigen Dichtungskomponente (110) auf der zweiten axialen Seite der leitfähigen Dichtungskomponente (110) entgegengesetzt zur ersten axialen Seite erstreckt.

6. Dichtungsanordnung (300) nach Anspruch 4, wobei
die leitfähige Verstärkungskomponente (120) mit einer leitfähigen verschleißfesten Komponente (125) versehen ist, und die verschleißfeste Komponente (125) an mindestens einer Oberfläche des zweiten axialen Verlängerungsteils (123) in der ersten radialen Richtung (Y1) befestigt ist.

7. Dichtungsanordnung (300) nach einem der Ansprüche 1 bis 6, wobei
der leitfähige Abschnitt (100) mit zwei Endflächen des angrenzenden nichtleitenden Abschnitts (200) überlappt, die in Umfangsrichtung miteinander verbunden sind, und die beiden Endflächen jeweils relativ zu einer radialen Ebene geneigt sind.

8. Dichtungsanordnung (300) nach einem der Ansprüche 1 bis 6, wobei
der leitfähige Abschnitt (100) mittels Schnappverbindung mit dem angrenzenden nichtleitenden Abschnitt (200) verbunden ist.

9. Lageranordnung, umfassend:
ein erstes Element und ein zweites Element, wobei das erste Element und das zweite Element konzentrisch angeordnet und relativ zueinander drehbar sind; und
die Dichtungsanordnung (300) nach einem der Ansprüche 1 bis 8, die zum Abdichten eines ringförmigen Raums zwischen dem ersten Element und dem zweiten Element dient.

10. Lageranordnung nach Anspruch 9, wobei ein leitfähiger Abschnitt (100) der Dichtungsanordnung (300) Folgendes umfasst:
eine leitfähige Dichtungskomponente (110), die ein Endteil in einer ersten radialen Richtung (Y1) zum Anliegen an dem zweiten Element und ein Endteil in einer zweiten radialen Richtung (Y2) entgegengesetzt zur ersten radialen Richtung (Y1) zum Anliegen an dem ersten Element aufweist.

11. Lageranordnung nach Anspruch 10, wobei der leitfähige Abschnitt (100) ferner Folgendes umfasst:
eine leitfähige Verstärkungskomponente (120), die mit der leitfähigen Dichtungskomponente (110) verbunden ist, wobei eine Leitfähigkeit der leitfähigen Verstärkungskomponente (120) höher ist als jene der leitfähigen Dichtungskomponente (110).

12. Lageranordnung nach Anspruch 11, wobei die leitfähige Verstärkungskomponente (120) Folgendes umfasst:
ein Körperteil (121), das sich auf einer ersten axialen Seite der leitfähigen Dichtungskomponente entlang einer ersten axialen Richtung (X1) von dem ringförmigen Raum entfernt befindet;
ein erstes axiales Verlängerungsteil (122), das sich von einem zweiten radialen Endteil des Körperteils (121) in der zweiten radialen Richtung (Y2) entlang der ersten axialen Richtung (X1) oder einer zweiten axialen Richtung (X2) erstreckt und mit dem ersten Element in Kontakt steht, wobei die zweite axiale Richtung (X2) der ersten axialen Richtung (X1) entgegengesetzt ist; und
ein zweites axiales Verlängerungsteil (123), das sich von einem ersten radialen Endteil des Körperteils (121) in der ersten radialen Richtung entlang der ersten axialen Richtung (X1) oder der zweiten axialen Richtung (X2) erstreckt und mit dem zweiten Element in Kontakt steht.
